# EUROPEAN PATENT APPLICATION

(11) **EP 4 131 869 A1**
(43) Date of publication of application: **08.02.2023**
(21) Application number: 20933669.2
(22) Date of filing: 28.04.2020
(51) Int. Cl.: H04L 12/721, H04L 12/26

(54) **COMMUNICATION METHOD, APPARATUS, AND SYSTEM**

(71) Applicant: Huawei Technologies Co., Ltd., Shenzhen, Guangdong 518129, (CN)
(72) Inventor: LIU, Yun, Shenzhen, Guangdong 518129 (CN); WANG, Dayong, Shenzhen, Guangdong 518129 (CN); WEI, Jichuan, Shenzhen, Guangdong 518129 (CN); ZHANG, Weizhuang, Shenzhen, Guangdong 518129 (CN)
(74) Representative: MERH-IP Matias Erny Reichl Hoffmann Patentanwälte PartG mbB
(86) International application number: PCT/CN2020/087620
(87) International publication number: WO 2021/217460

(57) **Abstract**

This application discloses a communication method, apparatus, and system, and belongs to the communications field. The method includes: A first primary transmission device obtains an actual bandwidth of a target link, where the target link includes a link between a first device and a second device, and the first device and the second device are third-party devices different from the first primary transmission device and a second primary transmission device. The first primary transmission device sends a first packet on the target link based on a first bandwidth, and sends a second packet on the target link based on a second bandwidth, where the first bandwidth is less than or equal to the actual bandwidth, the second bandwidth is equal to a total bandwidth of an interface minus the first bandwidth, the interface is an interface that is on the first primary transmission device and that is connected to the first device, the first packet is a packet belonging to the network traffic, and the second packet is a packet used to measure the bandwidth of the target link. In this application, a waste of bandwidth resources can be reduced.

## Description

### TECHNICAL FIELD

This application relates to the communications field, and in particular, to a communication method, apparatus, and system.

### BACKGROUND

In the communications field, because a single link has a low bandwidth to perform information transmission, a plurality of links between two devices may be bundled, to form a bundled link that has a high bandwidth to perform information transmission.

The two devices may be referred to as primary devices. In addition to a direct link between the two primary devices, the two primary devices may further bundle a third-party link. The third-party link is a link between two third-party devices, where one third-party device is connected to one primary device, and the other third-party device is connected to the other primary device. In other words, the bundled link formed through bundling between the two primary devices may include the direct link between the two primary devices and the third-party link. In this way, the two primary devices may simultaneously perform information transmission on the third-party link and the direct link that are included in the bundled link.

Currently, when the two primary devices perform information transmission on the third-party link included in the bundled link, only a small part of bandwidth resources on the third-party link can be used, but a large part of bandwidth resources on the third-party link are wasted.

### SUMMARY

Embodiments of this application provide a communication method, apparatus, and system, to reduce a waste of bandwidth resources. Technical solutions are as follows.

According to a first aspect, this application provides a communication method. The method includes: A first primary transmission device obtains an actual bandwidth of a target link, where the target link is a link that is between the first primary transmission device and a second primary transmission device and that is used to transmit network traffic, the target link includes a link between a first device and a second device, the first device is connected to the first primary transmission device, the second device is connected to the second primary transmission device, and the first device and the second device are third-party devices different from the first primary transmission device and the second primary transmission device. The first primary transmission device sends a first packet on the target link based on a first bandwidth, and sends a second packet on the target link based on a second bandwidth, where the first bandwidth is less than or equal to the actual bandwidth, the second bandwidth is equal to a total bandwidth of an interface minus the first bandwidth, the interface is an interface that is on the first primary transmission device and that is connected to the first device, the first packet is a packet belonging to the network traffic, and the second packet is a packet used to measure the bandwidth of the target link. Because the actual bandwidth of the target link may be obtained, the first bandwidth is determined based on the actual bandwidth, and the first packet is sent on the target link based on the first bandwidth, where the first packet is the packet belonging to the network traffic. In this way, the bandwidth of the target link is occupied as much as possible to send the network traffic, so that a waste of bandwidth resources is reduced.

In a possible implementation, a priority of the first packet is higher than a priority of the second packet. In this way, during transmission of the first packet and the second packet on the target link, because the priority of the first packet is higher than the priority of the second packet, the first packet is preferentially transmitted, so that discarding of the first packet is avoided during transmission.

In another possible implementation, the first packet includes first indication information, the first indication information indicates a packet type of the first packet, the second packet includes second indication information, and the second indication information indicates a packet type of the second packet. In this way, when receiving packets, the second primary transmission device determines, from the received packets based on indication information in the packets, a first packet belonging to network traffic.

In another possible implementation, the first primary transmission device receives a third packet sent by the second primary transmission device, where the third packet includes the actual bandwidth obtained by the second primary transmission device by measuring the target link, and a priority of the third packet is higher than the priority of the second packet. Because the priority of the third packet is higher than the priority of the second packet, during transmitting of the third packet, discarding of the third packet is avoided during transmission.

According to a second aspect, this application provides a communication method. The method includes: A second primary transmission device receives, from a target link, a packet sent by a first primary transmission device, where the target link is a link that is between the first primary transmission device and the second primary transmission device and that is used to transmit network traffic, the target link includes a link between a first device and a second device, the first device is connected to the first primary transmission device, the second device is connected to the second primary transmission device, and the first device and the second device are third-party devices different from the first primary transmission device and the second primary transmission device. The second primary transmission device measures an actual bandwidth of the target link based on a data amount of each packet received within a period of time. The second primary transmission device sends a third packet to the first primary transmission device, where the third packet includes the actual bandwidth, and the third packet is used to trigger the first primary transmission device to send a packet on the target link based on the actual bandwidth. Because the third packet sent by the second primary transmission device to the first primary transmission device includes the actual bandwidth, the first primary transmission device sends the first packet on the target link based on the actual bandwidth, where the first packet is the packet belonging to the network traffic. In this way, the bandwidth of the target link is occupied as much as possible to send the network traffic, so that a waste of bandwidth resources is reduced.

In a possible implementation, the second primary transmission device sends a plurality of third packets to the first primary transmission device when the actual bandwidth is different from a previously measured bandwidth of the target link, where each third packet includes the actual bandwidth. Because the plurality of third packets are sent, it is ensured that the actual bandwidth is sent to the first primary transmission device as much as possible.

In another possible implementation, the packet includes indication information, and the indication information indicates a packet type of the packet. The second primary transmission device sends a first packet when the indication information indicates that the packet is the first packet, where the first packet is a packet belonging to the network traffic; or discards a second packet when the indication information indicates that the packet is the second packet, where the second packet is a packet used to measure the bandwidth of the target link.

In another possible implementation, a priority of the first packet is higher than a priority of the second packet, and a priority of the third packet is higher than the priority of the second packet. Because the priority of the third packet is higher than the priority of the second packet, during transmitting of the third packet, discarding of the third packet is avoided during transmission.

According to a third aspect, this application provides a communication apparatus, configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect.

According to a fifth aspect, this application provides a communication apparatus, where the apparatus includes: a processor, a memory, and a transceiver. The processor, the memory, and the transceiver may be connected through a bus system. The memory is configured to store one or more programs, and the processor is configured to execute the one or more programs in the memory, to complete the method according to any one of the first aspect or the possible implementations of the first aspect.

According to a sixth aspect, this application provides a communication apparatus, where the apparatus includes: a processor, a memory, and a transceiver. The processor, the memory, and the transceiver may be connected through a bus system. The memory is configured to store one or more programs, and the processor is configured to execute the one or more programs in the memory, to complete the method according to any one of the second aspect or the possible implementations of the second aspect.

According to a seventh aspect, this application provides a computer-readable storage medium. The computer-readable storage medium stores program code. When the program code is run on a computer, the computer is enabled to perform the method according to any one of the first aspect, the second aspect, the possible implementations of the first aspect, or the possible implementations of the second aspect.

According to an eighth aspect, this application provides a computer program product including program code. When the computer program product runs on a computer, the computer is enabled to perform the method according to any one of the first aspect, the second aspect, the possible implementations of the first aspect, or the possible implementations of the second aspect.

According to a ninth aspect, this application provides a communication system, including the apparatus according to the third aspect and the apparatus according to the fourth aspect; or including the apparatus according to the fifth aspect and the apparatus according to the sixth aspect are included.

### BRIEF DESCRIPTION OF DRAWINGS

FIG. 1 is a schematic diagram of a network architecture according to an embodiment of this application;
FIG. 2 is a flowchart of a communication method according to an embodiment of this application;
FIG. 3 is a schematic diagram of another network architecture according to an embodiment of this application;
FIG. 4 is a schematic diagram of another network architecture according to an embodiment of this application;
FIG. 5 is a schematic diagram of another network architecture according to an embodiment of this application;
FIG. 6 is a schematic diagram of a structure of a communication apparatus according to an embodiment of this application;
FIG. 7 is a schematic diagram of a structure of another communication apparatus according to an embodiment of this application;
FIG. 8 is a schematic diagram of a structure of another communication apparatus according to an embodiment of this application;
FIG. 9 is a schematic diagram of a structure of another communication apparatus according to an embodiment of this application; and
FIG. 10 is a schematic diagram of a structure of a communication system according to an embodiment of this application.

### DESCRIPTION OF EMBODIMENTS

The following further describes in detail implementations of this application with reference to the accompanying drawings.

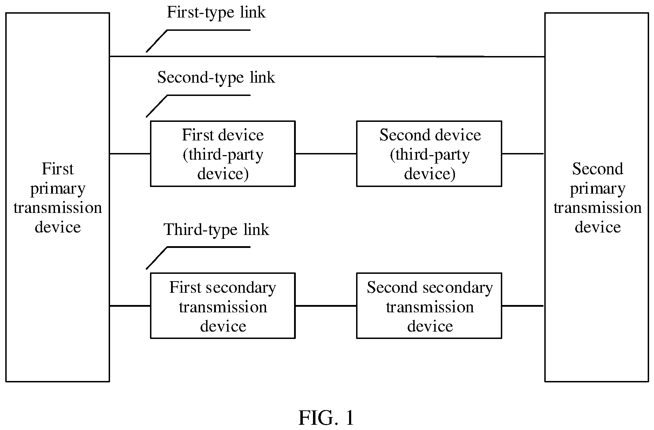

Refer to FIG. 1. An embodiment of this application provides a network architecture. The network architecture includes a first primary transmission device and a second primary transmission device.

There are a plurality of links between the first primary transmission device and the second primary transmission device. The plurality of links between the first primary transmission device and the second primary transmission device are logically bundled into one bundled link, so that the bundled link that has a high bandwidth is obtained. In this way, the first primary transmission device sends a packet to the second primary transmission device through the bundled link, or the second primary transmission device sends a packet to the first primary transmission device through the bundled link.

It should be noted that the bundled link includes the plurality of links, and that the first primary transmission device sends a packet to the second primary transmission device through the bundled link means that the first primary transmission device simultaneously sends the packet to the second primary transmission device on the plurality of links included in the bundled link. Similarly, that the second primary transmission device sends a packet to the first primary transmission device through the bundled link means that the second primary transmission device simultaneously sends the packet to the first primary transmission device on the plurality of links included in the bundled link. In this way, the plurality of links are logically bundled into one bundled link, so that the packet is transmitted on the bundled link.

There may be the following several types of links between the first primary transmission device and the second primary transmission device, and the several types of links are respectively as follows:

Refer to FIG. 1. A first-type link is a direct link between the first primary transmission device and the second primary transmission device that are directly connected.

The direct link between the first primary transmission device and the second primary transmission device does not need to pass through another device other than the first primary transmission device and the second primary transmission device.

For example, refer to FIG. 1. The first-type link may be a direct microwave link established between an air interface included in the first primary transmission device and an air interface included in the second primary transmission device.

Optionally, when the first-type link is the direct microwave link, a frequency band used by the first-type link may be a common frequency band or an E-BAND frequency band.

The common frequency band is a frequency band whose frequency is greater than or equal to 7 GHz and less than or equal to 38 GHz. The E-BAND frequency band is a microwave frequency band, and is a frequency band whose frequency is greater than or equal to 71 GHz and less than or equal to 86 GHz.

Refer to FIG. 1. A second-type link passes through a first device and a second device, and the first device and the second device are third-party devices different from the first primary transmission device and the second primary transmission device. The first device is connected to the first primary transmission device, and the second device is connected to the second primary transmission device. The second-type link includes a link between the first primary transmission device and the first device, a link between the first device and the second device, and a link between the second device and the second primary transmission device.

Optionally, the first device is connected to a first interface on the first primary transmission device through a physical line, the second device is connected to a first interface on the second primary transmission device through a physical line, and the first device and the second device are connected in a wired or wireless manner.

Optionally, the first interface on the first primary transmission device is an Ethernet interface, and the first interface on the second primary transmission device is an Ethernet interface. In this way, the second-type link includes an Ethernet link between the first primary transmission device and the first device, the link between the first device and the second device, and an Ethernet link between the second device and the second primary transmission device.

The link between the first device and the second device is a wireless link or a wired link. For example, refer to FIG. 1. The link between the first device and the second device is a microwave link. In this way, the second-type link includes the Ethernet link between the first primary transmission device and the first device, the microwave link between the first device and the second device, and the Ethernet link between the second device and the second primary transmission device.

A frequency band used by the microwave link between the first device and the second device may be a common frequency band or an E-BAND frequency band.

Refer to FIG. 1. A third-type link passes through a first secondary transmission device and a second secondary transmission device, and the first secondary transmission device and the second secondary transmission device are devices of a same category as the first primary transmission device and the second primary transmission device. The first secondary transmission device is connected to the first primary transmission device, and the second secondary transmission device is connected to the second primary transmission device. The third-type link includes a link between the first primary transmission device and the first secondary transmission device, a link between the first secondary transmission device and the second secondary transmission device, and a link between the second secondary transmission device and the second primary transmission device.

Optionally, the first secondary transmission device is connected to a second interface on the first primary transmission device through a physical line, the second secondary transmission device is connected to a second interface on the second primary transmission device through a physical line, and the first secondary transmission device and the second secondary transmission device are connected in a wired or wireless manner.

Optionally, the second interface on the first primary transmission device is an Ethernet interface, and the second interface on the second primary transmission device is an Ethernet interface. In this way, the third-type link includes an Ethernet link between the first primary transmission device and the first secondary transmission device, the link between the first secondary transmission device and the second secondary transmission device, and an Ethernet link between the second secondary transmission device and the second primary transmission device.

The link between the first secondary transmission device and the second secondary transmission device is a wireless link or a wired link. For example, refer to FIG. 1. The link between the first secondary transmission device and the second secondary transmission device is a microwave link. In this way, the third-type link includes the Ethernet link between the first primary transmission device and the first secondary transmission device, the microwave link between the first secondary transmission device and the second secondary transmission device, and the Ethernet link between the second secondary transmission device and the second primary transmission device.

A frequency band used by the microwave link between the first secondary transmission device and the second secondary transmission device may be a common frequency band or an E-BAND frequency band.

Optionally, the bundled link between the first primary transmission device and the second primary transmission device may include the first-type link and the second-type link, or include the second-type link and the third-type link, or include the first-type link, the second-type link, and the third-type link.

Optionally, in the bundled link between the first primary transmission device and the second primary transmission device, a quantity of the first-type links may be greater than or equal to 1, a quantity of the second-type links may be greater than or equal to 1, and/or a quantity of the third-type links may be greater than or equal to 1.

It should be noted that any link included in the bundled link may be affected by weather. As a result, an actual bandwidth of the link changes with the weather. The link corresponds to a bandwidth change range, and the actual bandwidth of the link usually changes within the bandwidth change range.

For the first-type link included in the bundled link, because the first-type link is the direct link between the first primary transmission device and the second primary transmission device, the first primary transmission device may measure an actual bandwidth of the first-type link in real time. When sending a packet on the first-type link, the first primary transmission device sends the packet to the second primary transmission device based on the actual bandwidth of the first-type link.

For the third-type link included in the bundled link, because the first secondary transmission device and the second secondary transmission device through which the third-type link passes are the devices of the same category as the first primary transmission device and the second primary transmission device, the first secondary transmission device may measure an actual bandwidth of the third-type link in real time and send the actual bandwidth of the third-type link to the first primary transmission device. The first primary transmission device receives the actual bandwidth of the third-type link. When sending a packet on the third-type link, the first primary transmission device sends the packet to the second primary transmission device based on the actual bandwidth of the third-type link.

For the second-type link included in the bundled link, because the first device and the second device through which the second-type link passes are the devices different from the first primary transmission device and the second primary transmission device, the first device does not send an actual bandwidth of the second-type link to the first primary transmission device. In this way, the first primary transmission device cannot learn of the actual bandwidth of the second-type link. When sending a packet on the second-type link, the first primary transmission device sends the packet to the second primary transmission device based on a specified bandwidth. The specified bandwidth is less than or equal to a lower limit value of a bandwidth change range corresponding to the second-type link, and the actual bandwidth of the second-type link changes within the bandwidth change range. Therefore, the specified bandwidth is usually less than the actual bandwidth of the second-type link. In this way, after sending the packet on the second-type link, the first primary transmission device does not fully occupy the actual bandwidth of the second-type link, so that a case in which a packet loss occurs when the packet is transmitted on the second-type link is avoided.

Optionally, that the first device and the second device are third-party devices different from the first primary transmission device and the second primary transmission device means that manufacturers of the first device and the second device are different from manufacturers of the first primary transmission device and the second primary transmission device; or operators of the first device and the second device are different from operators of the first primary transmission device and the second primary transmission device, or categories of the first device and the second device are different from categories of the first primary transmission device and the second primary transmission device. Therefore, the first device does not send the actual bandwidth of the second-type link to the first primary transmission device.

Optionally, that the first secondary transmission device and the second secondary transmission device are devices of a same category as the first primary transmission device and the second primary transmission device means that manufacturers of the first secondary transmission device and the second secondary transmission device are the same as manufacturers of the first primary transmission device and the second primary transmission device; or operators of the first secondary transmission device and the second secondary transmission device are the same as operators of the first primary transmission device and the second primary transmission device. Therefore, the first secondary transmission device sends the actual bandwidth of the third-type link to the first primary transmission device.

Because the specified bandwidth is less than the actual bandwidth of the second-type link, a large quantity of bandwidth resources on the second-type link are wasted. To resolve this problem, a probe packet used to measure the bandwidth of the second-type link is defined in this embodiment of this application. The first primary transmission device obtains an actual bandwidth of the second-type link by using the probe packet, and then sends a packet on the second-type link based on the actual bandwidth. A detailed implementation process of obtaining the actual bandwidth of the second-type link and sending the packet on the second-type link is described in detail in subsequent embodiments, and is not described herein.

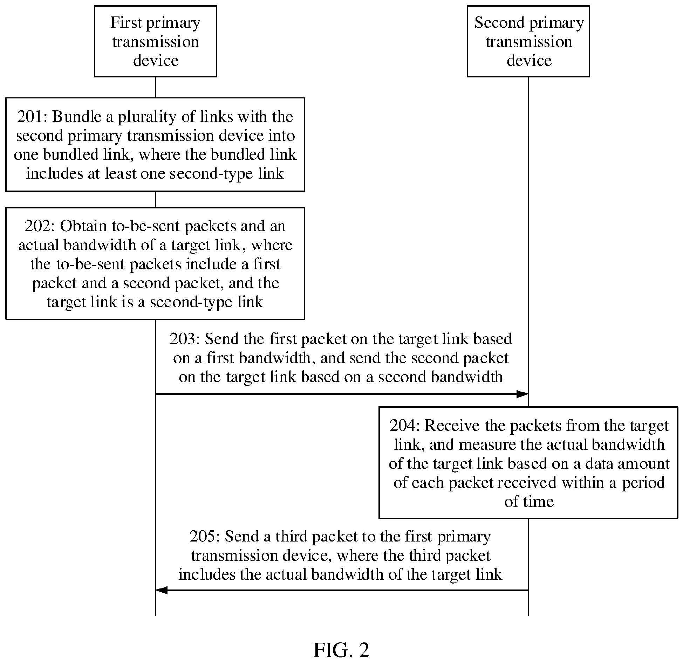

Refer to FIG. 2. An embodiment of this application provides a communication method. The communication method may be applied to the network architecture shown in FIG. 1, and includes the following steps:

Step 201: A first primary transmission device bundles a plurality of links between the first primary transmission device and a second primary transmission device into one bundled link, where the bundled link includes at least one second-type link between the first primary transmission device and the second primary transmission device.

Optionally, the bundled link further includes at least one first-type link and/or at least one third-type link between the first primary transmission device and the second primary transmission device.

The second-type link is a third-party link between the first primary transmission device and the second primary transmission device.

Before this step is performed, a management device configures identities of two devices as primary transmission devices, where the two primary transmission devices are the first primary transmission device and the second primary transmission device; and configures the first primary transmission device and the second primary transmission device to bundle the plurality of links between the first primary transmission device and the second primary transmission device into one bundled link.

Optionally, at least one second-type link is included between the first primary transmission device and the second primary transmission device.

For any second-type link, the second-type link includes a link between the first primary transmission device and the first device, a link between the first device and the second device, and a link between the second device and the second primary transmission device.

The management device may configure, on the first primary transmission device and the second primary transmission device, each second-type link that needs to be bundled together and a specified bandwidth corresponding to each second-type link. Then, the first primary transmission device may logically bundle each configured second-type link into one bundled link.

The specified bandwidth of the second-type link is a minimum guaranteed bandwidth of the second-type link. When the first primary transmission device does not obtain an actual bandwidth of the second-type link, the first primary transmission device may send a packet to the second primary transmission device on the second-type link based on the minimum guaranteed bandwidth.

Optionally, the minimum guaranteed bandwidth of the second-type link may be a lower limit value of a bandwidth change range of the second-type link. For example, assuming that the bandwidth change range of the second-type link is greater than or equal to 100 M/S and less than or equal to 500 M/S, the minimum guaranteed bandwidth of the second-type link may be 100 M/S.

Optionally, during packet transmission on the second-type link, a high-priority packet is preferentially transmitted. To be specific, after the first primary transmission device sends the packets to the second primary transmission device on the second-type link, the first device and/or the second device through which the second-type link passes preferentially transmit/transmits the high-priority packet to the second primary transmission device on the second-type link.

Optionally, the at least one first-type link may be further included between the first primary transmission device and the second primary transmission device, and the first-type link is a direct link between the first primary transmission device and the second primary transmission device.

Optionally, the management device may configure the at least one first-type link and the at least one second-type link to be bundled together. Then, the first primary transmission device may logically bundle the configured at least one first-type link and the configured at least one second-type link into one bundled link. In other words, the bundled link includes the at least one first-type link and the at least one second-type link.

Optionally, the at least one third-type link may be further included between the first primary transmission device and the second primary transmission device. For any third-type link between the first primary transmission device and the second primary transmission device, the third-type link includes a link between the first primary transmission device and the first secondary transmission device, a link between the first secondary transmission device and the second secondary transmission device, and a link between the second transmission device and the second primary transmission device.

Optionally, the management device may configure the at least one second-type link and the at least one third-type link to be bundled together. Then, the first primary transmission device may logically bundle the configured at least one second-type link and the configured at least one third-type link into one bundled link. In other words, the bundled link includes the at least one second-type link and the at least one third-type link.

Alternatively, the management device may configure the at least one first-type link, the at least one second-type link, and the at least one third-type link to be bundled together. Then, the first primary transmission device may logically bundle the configured at least one first-type link, the configured at least one second-type link, and the configured at least one third-type link into one bundled link. In other words, the bundled link includes the at least one first-type link, the at least one second-type link, and the at least one third-type link.

The first primary transmission device and the second primary transmission device are two network devices used to transmit network traffic in a communication network. To be specific, the first primary transmission device receives at least one piece of network traffic, and then sends the at least one piece of network traffic to the second primary transmission device. A detailed sending process is as follows:

Step 202: The first primary transmission device obtains to-be-sent packets and an actual bandwidth of a target link, where the to-be-sent packets include at least one first packet and at least one second packet, the first packet is a packet belonging to network traffic, the network traffic is traffic transmitted between the first primary transmission device and the second primary transmission device, the second packet is a packet used to measure a bandwidth of the second-type link, and the target link is a second-type link between the first primary transmission device and the second primary transmission device.

The first primary transmission device receives a data packet belonging to the network traffic, and slices the data packet to obtain a plurality of sliced packets, and the first packet includes the plurality of sliced packets. The first primary transmission device may further obtain a control packet belonging to the network traffic, and the first packet further includes the control packet.

The second packet is a packet that is generated by the first primary transmission device and that is to be sent on the target link, and the second packet is the foregoing probe packet.

Optionally, the target link passes through the first device connected to the first primary transmission device and the second device connected to the second primary transmission device. For the second packet to be sent on the target link, the second packet may be a broadcast packet, a source address of the second packet is an address of a first interface, the first interface is an interface that is on the first primary transmission device and that is connected to the first device, and a destination address of the second packet is a broadcast address.

Optionally, the broadcast address is a media access control (media access control, MAC) address or an internet protocol (internet protocol, IP) address. For example, when the broadcast address is the MAC address, the broadcast address may be FFFFFFFFFFFF.

Optionally, a priority of the first packet is higher than a priority of the second packet. The address of the first interface may be a MAC address, an IP address, or the like of the first interface.

Optionally, the first packet includes first indication information, the first indication information indicates a packet type of the first packet, the packet type indicated by the first indication information is the sliced packet obtained through slicing or the control packet, the second packet includes second indication information, the second indication information indicates a packet type of the second packet, and the packet type indicated by the second indication information is the probe packet used to measure a bandwidth.

Optionally, the first indication information and the second indication information are identifiers of two different virtual local area networks (virtual local area network, VLAN). In this way, the packet type of the first packet is identified by using the identifier of the VLAN in the first packet, and the packet type of the second packet is identified by using the identifier of the VLAN in the second packet.

Optionally, a packet header of the first packet includes a type field, and the type field carries the first indication information. A packet header of the second packet includes a type field, and the type field carries the second indication information.

For the sliced packets obtained by slicing the data packet, each of the plurality of sliced packets includes a packet sequence number. Sliced packets obtained by slicing each data packet include different packet sequence numbers. When the data packet is sliced, the first sliced packet obtained through slicing further includes header indication information, where the header indication information is used to identify the first sliced packet included in the data packet, and the last sliced packet obtained through slicing further includes tail indication information, where the tail indication information is used to identify the last sliced packet included in the data packet.

Optionally, after obtaining the bundled link through bundling, the first primary transmission device obtains a specified bandwidth of the target link as the actual bandwidth when sending a packet for the first time, generates a second packet, and sends the second packet to the second primary transmission device on the target link based on the actual bandwidth, so that the second primary transmission device obtains the actual bandwidth of the target link through measurement based on the second packet, and receives a third packet sent by the second primary transmission device, where the third packet includes the actual bandwidth of the target link. Then, when the first primary transmission device needs to obtain the actual bandwidth of the target link again, the first primary transmission device may extract the actual bandwidth of the target link from the third packet.

The first primary transmission device continuously generates the second packet, sends the second packet to the second primary transmission device on the target link based on the extracted actual bandwidth, and receives the third packet sent by the second primary transmission device, where the third packet includes the actual bandwidth of the target link. In this way, the foregoing process is continuously repeated, so that the first primary transmission device may obtain the actual bandwidth of the target link at a different moment.

A process of sending the second packet based on the actual bandwidth of the target link is described in detail in a subsequent step 203.

The second primary transmission device periodically sends the third packet to the first primary transmission device. The third packet includes an actual bandwidth that is of the target link and that is obtained by the second primary transmission device through latest measurement. Alternatively, when the measured actual bandwidth of the target link is different from a previously measured bandwidth of the target link, the second primary transmission device sends the third packet to the first primary transmission device, where the third packet includes the actual bandwidth that is of the target link and that is measured by the second primary transmission device.

Therefore, in this step, after obtaining the bundled link through bundling, the first primary transmission device obtains the specified bandwidth of the target link as the actual bandwidth when sending the packet for the first time; or after receiving the third packet sent by the second primary transmission device, the first primary transmission device obtains the actual bandwidth of the target link from the third packet.

Optionally, when sending the third packet including the actual bandwidth of the target link, the second primary transmission device sends the third packet on the target link. In this way, the first primary transmission device receives the third packet from the target link, reads the actual bandwidth from the third packet, and uses the read actual bandwidth as the actual bandwidth of the target link. Alternatively, the second primary transmission device sends the third packet on any link included in the bundled link. In this case, in addition to the actual bandwidth of the target link, the third packet further includes a link identifier of the target link. In this way, the first primary transmission device receives the third packet, reads the actual bandwidth and the link identifier from the third packet, and uses the actual bandwidth as the actual bandwidth of the target link corresponding to the link identifier.

Optionally, a priority of the third packet is higher than the priority of the second packet. This ensures that when being transmitted on the link, the third packet is preferentially transmitted, so that a loss of the third packet is avoided.

Optionally, the first primary transmission device further measures an actual bandwidth of each first-type link between the first primary transmission device and the second primary transmission device.

Optionally, when the bundled link includes the third-type link, the first primary transmission device further obtains an actual bandwidth of each third-type link. For any third-type link, the first secondary transmission device through which the third-type link passes may measure an actual bandwidth of the third-type link, and send the actual bandwidth of the third-type link to the first primary transmission device. The first primary transmission device receives the actual bandwidth of the third-type link.

Step 203: The first primary transmission device sends the first packet on the target link based on a first bandwidth, and sends the second packet on the target link based on a second bandwidth, where the first bandwidth is less than or equal to the actual bandwidth of the target link, and the second bandwidth is equal to a total bandwidth of a first interface minus the first bandwidth.

A sum of a bandwidth required for sending the first packet and a bandwidth required for sending the second packet by the first primary transmission device is equal to the total bandwidth of the first interface. In this way, the entire first interface can be fully occupied, and the packet is sent to the second primary transmission device.

Before performing this step, the first primary transmission device determines the first bandwidth based on the actual bandwidth of the target link, and calculates the second bandwidth based on the total bandwidth of the first interface.

Optionally, if the first primary transmission device sends the packet for the first time after obtaining the bundled link through bundling, the first bandwidth is equal to the actual bandwidth of the target link, in other words, the first bandwidth is equal to the specified bandwidth of the target link.

The first bandwidth is less than or equal to the actual bandwidth of the target link, and the priority of the first packet is higher than the priority of the second packet. Therefore, in a process of transmitting the first packet and the second packet on the target link, if the actual bandwidth of the target link decreases, it can be ensured that the first packet may be preferentially transmitted to the second primary transmission device. This avoids a loss of the first packet or reduces a quantity of lost first packets, and uses bandwidth resources of the target link to the maximum extent, so that a waste of the bandwidth resources of the target link is reduced.

For the target link, the target link passes through the first device and the second device, and the first device or the second device receives the first packet and the second packet, and sends the first packet and the second packet to the second primary transmission device.

It should be noted that because the actual bandwidth of the target link changes with factors such as weather, a current actual bandwidth of the target link may not meet a bandwidth required for transmitting each received first packet and each received second packet. In addition, because the priority of the first packet is higher than the priority of the second packet, the first device or the second device preferentially sends the first packet to a first transmission device, but some second packets may be discarded by the first device or the second device because there is no sufficient bandwidth.

Optionally, the bundled link may include a plurality of second-type links. For each second-type link, the first packet and the second packet are sent on the second-type link based on an operation in this step.

It should be noted that the first primary transmission device simultaneously sends the packet on each link included in the bundled link, and sends a different packet on each link. For the first-type link and the third-type link included in the bundled link, both the packet sent by the first primary transmission device on the first-type link and the packet sent by the first primary transmission device on the second-type link are the first packets.

Optionally, for any first-type link, the first primary transmission device determines a third bandwidth, where the third bandwidth is less than or equal to an actual bandwidth of the first-type link; and sends the first packet on the first-type link based on the third bandwidth.

Because the first-type link is the direct link between the first primary transmission device and the second primary transmission device, for the first packet sent on the first-type link, the first packet is directly transmitted to the second primary transmission device through the first-type link.

Optionally, for any third-type link, the first primary transmission device determines a fourth bandwidth, where the fourth bandwidth is less than or equal to an actual bandwidth of the third-type link; and sends the first packet on the third-type link based on the fourth bandwidth.

Because the third-type link passes through the first secondary transmission device connected to the first primary transmission device and the second secondary transmission device connected to the second primary transmission device, the first secondary transmission device or the second secondary transmission device receives the first packet sent by the first primary transmission device, and forwards the first packet to the second primary transmission device.

Step 204: The second primary transmission device receives the packets from the target link, and measures the actual bandwidth of the target link based on a data amount of each packet received within a period of time.

Optionally, the period of time is equal to one receiving period. To be specific, each time the second primary transmission device finishes receiving packets in one receiving period from the target link, the second primary transmission device accumulates a data amount of each packet received in the receiving period to obtain an accumulated value, and measures an actual bandwidth of the target link based on the accumulated value and a period length of the receiving period.

Optionally, a ratio of the accumulated value to the period length is calculated, to obtain the actual bandwidth of the target link.

The packets received from the target link include the first packet and the second packet. For any received packet, the second primary transmission device further determines, based on indication information included in the packet, whether the packet is the first packet or the second packet. If being the first packet, the first packet is sent to a next hop of the second primary transmission device; or if being the second packet, the second packet is discarded.

When the bundled link includes the first-type link, the second primary transmission device further receives the first packet from the first-type link included in the bundled link, and sends the first packet to the next hop of the second primary transmission device. When the bundled link includes the third-type link, the second primary transmission device further receives the first packet from the third-type link included in the bundled link, and sends the first packet to the next hop of the second primary transmission device.

Optionally, an operation of sending the first packet to the second primary transmission device may include: determining a control packet and a sliced packet from each received first packet based on first indication information included in each received first packet, and sending the control packet to the next hop of the second primary transmission device; for the determined sliced packet, obtaining, from the determined sliced packet, the first sliced packet that includes header indication information and the last sliced packet that includes tail indication information, and obtaining at least one sliced packet whose packet sequence number is between a packet sequence number of the first sliced packet and a packet sequence number of the last sliced packet, where each of the at least one sliced packet does not include the header indication information and the tail indication information; and forming a data packet by the first sliced packet, the at least one sliced packet, and the last sliced packet, and sending the data packet to the next hop of the second primary transmission device.

Step 205: The second primary transmission device sends a third packet to the first primary transmission device, where the third packet includes the actual bandwidth of the target link.

In this step, the second primary transmission device compares the currently measured actual bandwidth with the previously measured bandwidth of the target link. When the currently measured actual bandwidth is different from the previously measured bandwidth, one or more third packets are immediately sent to the first primary transmission device, where each third packet includes the currently measured actual bandwidth.

When the currently measured actual bandwidth is the same as the previously measured bandwidth, a next sending period adjacent to a current sending period is waited for, and the third packet is sent to the first primary transmission device at a start time of the next sending period, where the third packet includes the currently measured actual bandwidth. Because the previously measured bandwidth has been sent at a start time of the current sending period, when the currently measured actual bandwidth is the same as the previously measured bandwidth, the currently measured actual bandwidth may not need to be immediately sent to the first primary transmission device, but the currently measured actual bandwidth is sent to the first primary transmission device only when the next sending period is waited for to arrive.

The second primary transmission device periodically sends, to the first primary transmission device based on the sending period, the actual bandwidth that is of the target link and that is obtained through latest measurement. In addition, each time the current actual bandwidth obtained through measurement is different from the previously measured bandwidth, one or more third packets are immediately sent to the first primary transmission device. This ensures that the first primary transmission device may obtain the actual bandwidth of the target link in time.

Optionally, the second primary transmission device sends the third packet on the target link. Alternatively, the second primary transmission device sends the third packet on any link included in the bundled link. In addition to the actual bandwidth of the target link, the third packet further includes the link identifier of the target link.

Optionally, a period length of the sending period is greater than or equal to the period length of the receiving period.

Optionally, the second primary transmission device may alternatively send the first packet and the second packet to the first primary transmission device on the target link. For a detailed sending process, refer to related content in the foregoing step 203. Details are not described herein again.

The first primary transmission device and the second primary transmission device repeat operations in the foregoing steps 202 to 205, so that the first primary transmission device continuously sends the packet to the second primary transmission device.

In this embodiment of this application, because the first primary transmission device sends, to the second primary transmission device on the target link, the second packet used to measure the bandwidth of the target link, the second primary transmission device may measure the actual bandwidth of the target link, and send the actual bandwidth of the target link to the first primary transmission device. The first primary transmission device receives the actual bandwidth of the target link, and may send the packet on the target link based on the actual bandwidth, so that the waste of the bandwidth resources on the target link is avoided.

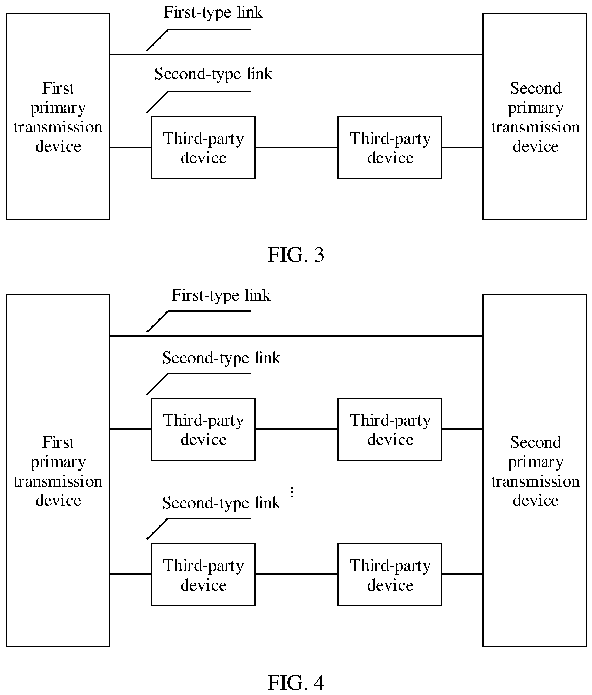

The foregoing briefly describes the method embodiment of this application with reference to the network scenario shown in FIG. 1. As shown in FIG. 3 to FIG. 5, the following provides, with reference to various different application scenarios, specific application examples of the method embodiment shown in FIG. 2.

FIG. 3 is a specific application of the method embodiment shown in FIG. 2. In the application, the bundled link between the first primary transmission device and the second primary transmission device includes one first-type link and one second-type link, in other words, the bundled link includes one target link and one direct link. The first primary transmission device obtains an actual bandwidth of the target link, sends a first packet and a second packet on the target link based on the actual bandwidth of the target link, and also sends a first packet on the direct link based on an actual bandwidth of the direct link. The second primary transmission device receives the first packet and the second packet on the target link, measures an actual bandwidth of the target link, and sends the actual bandwidth of the target link to the first primary transmission device.

FIG. 4 is a specific application of the method embodiment shown in FIG. 2. In the application, the bundled link between the first primary transmission device and the second primary transmission device includes one first-type link and a plurality of second-type links, in other words, the bundled link includes a plurality of target links and one direct link. For any target link, the first primary transmission device obtains an actual bandwidth of the target link, sends a first packet and a second packet on the target link based on the actual bandwidth of the target link, and also sends a first packet on the direct link based on an actual bandwidth of the direct link. The second primary transmission device receives the first packet and the second packet on the target link, measures an actual bandwidth of the target link, and sends the actual bandwidth of the target link to the first primary transmission device.

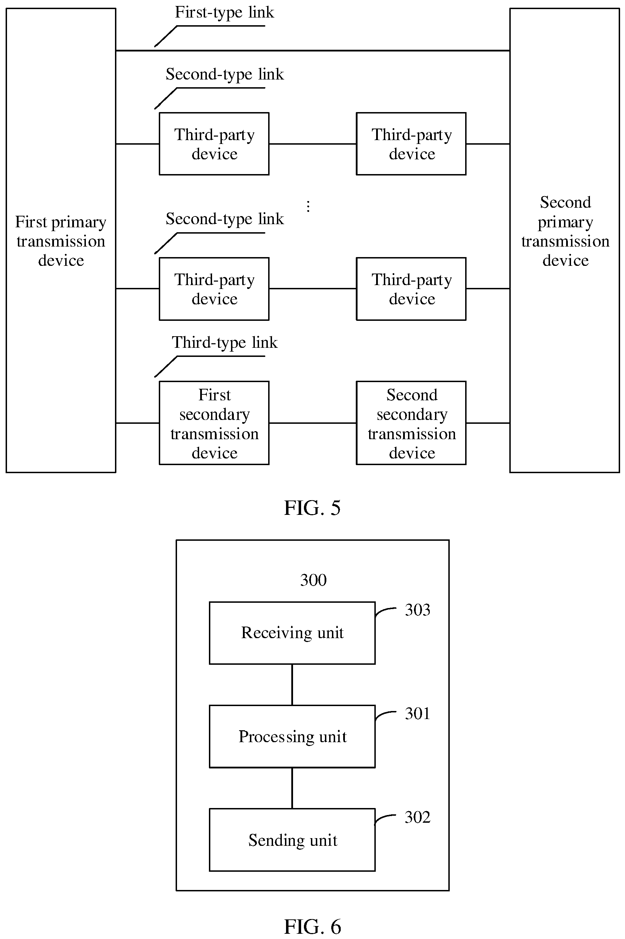

FIG. 5 is a specific application of the method embodiment shown in FIG. 2. In the application, the bundled link between the first primary transmission device and the second primary transmission device includes one first-type link, one third-type link, and a plurality of second-type links, in other words, the bundled link includes a plurality of target links, one direct link, and one third-type link. For any target link, the first primary transmission device obtains an actual bandwidth of the target link, sends a first packet and a second packet on the target link based on the actual bandwidth of the target link, also sends a first packet on the direct link based on an actual bandwidth of the direct link, and sends a first packet on the third-type link based on an actual bandwidth of the third-type link. The second primary transmission device receives the first packet and the second packet on the target link, measures an actual bandwidth of the target link, and sends the actual bandwidth of the target link to the first primary transmission device.

Refer to FIG. 6. An embodiment of this application provides a communication apparatus 300. The apparatus 300 may be deployed on the first primary transmission device provided in any one of the foregoing embodiments. For example, the apparatus 300 may be deployed on the first primary transmission device in any one of embodiments shown in FIG. 1 to FIG. 5, and includes:
a processing unit 301, configured to obtain an actual bandwidth of a target link, where the target link is a link that is between the apparatus 300 and a second primary transmission device and that is used to transmit network traffic, the target link includes a link between a first device and a second device, the first device is connected to the apparatus 300, the second device is connected to the second primary transmission device, and the first device and the second device are third-party devices different from the apparatus 300 and the second primary transmission device; and
a sending unit 302, configured to: send a first packet on the target link based on a first bandwidth, and send a second packet on the target link based on a second bandwidth, where the first bandwidth is less than or equal to the actual bandwidth, the second bandwidth is equal to a total bandwidth of an interface minus the first bandwidth, the interface is an interface that is on the apparatus 300 and that is connected to the first device, the first packet is a packet belonging to the network traffic, and the second packet is a packet used to measure the bandwidth of the target link.

Optionally, a priority of the first packet is higher than a priority of the second packet.

Optionally, the first packet includes first indication information, the first indication information indicates a packet type of the first packet, the second packet includes second indication information, and the second indication information indicates a packet type of the second packet.

Optionally, the apparatus 300 further includes:
a receiving unit 303, configured to receive a third packet sent by the second primary transmission device, where the third packet includes the actual bandwidth obtained by the second primary transmission device by measuring the target link, and a priority of the third packet is higher than the priority of the second packet.

In this embodiment of this application, the processing unit obtains the actual bandwidth of the target link. The sending unit sends the first packet on the target link based on the first bandwidth, and sends the second packet on the target link based on the second bandwidth, where the first bandwidth is less than or equal to the actual bandwidth. Because the processing unit may obtain the actual bandwidth of the target link, the processing unit determines the first bandwidth based on the actual bandwidth, and the sending unit sends the first packet on the target link based on the first bandwidth, where the first packet is the packet belonging to the network traffic. In this way, the bandwidth of the target link is occupied as much as possible to send the network traffic, so that a waste of bandwidth resources is reduced.

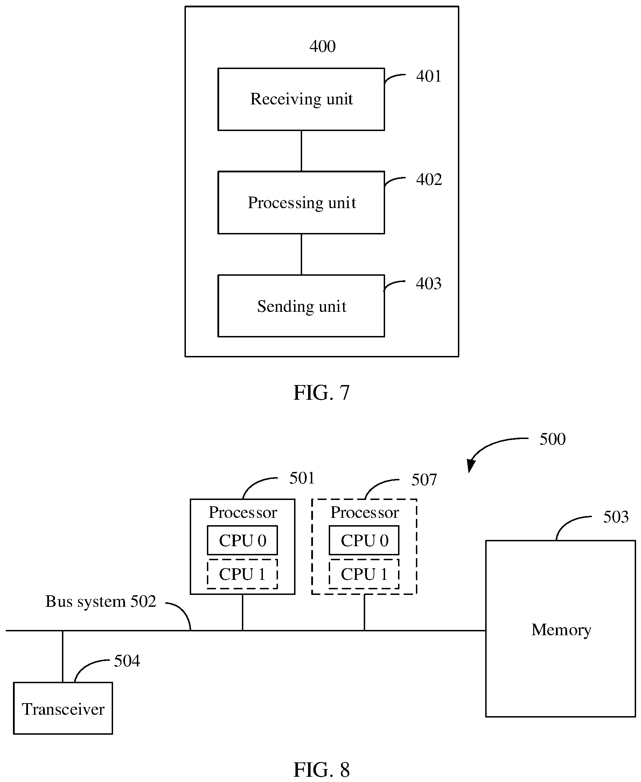

Refer to FIG. 7. An embodiment of this application provides a communication apparatus 400. The apparatus 400 may be deployed on the second primary transmission device provided in any one of the foregoing embodiments. For example, the apparatus 400 may be deployed on the first primary transmission device provided in any one of embodiments shown in FIG. 1 to FIG. 5, and includes:
a receiving unit 401, configured to receive, from a target link, a packet sent by a first primary transmission device, where the target link is a link that is between the first primary transmission device and the apparatus 400 and that is used to transmit network traffic, the target link includes a link between a first device and a second device, the first device is connected to the first primary transmission device, the second device is connected to the apparatus 400, and the first device and the second device are third-party devices different from the first primary transmission device and the apparatus 400;
a processing unit 402, configured to measure an actual bandwidth of the target link based on a data amount of each packet received within a period of time; and
a sending unit 403, configured to send a third packet to the first primary transmission device, where the third packet includes the actual bandwidth, and the third packet is used to trigger the first primary transmission device to send a packet on the target link based on the actual bandwidth.

Optionally, the sending unit 403 is configured to send a plurality of third packets to the first primary transmission device when the actual bandwidth is different from a previously measured bandwidth of the target link, where each third packet includes the actual bandwidth.

Optionally, the packet includes indication information, and the indication information indicates a packet type of the packet.

The sending unit 403 is further configured to send a first packet when the indication information indicates that the packet is the first packet, where the first packet is a packet belonging to the network traffic.

Alternatively, the processing unit 402 is further configured to discard a second packet when the indication information indicates that the packet is the second packet, where the second packet is a packet used to measure the bandwidth of the target link.

Optionally, a priority of the first packet is higher than a priority of the second packet, and a priority of the third packet is higher than the priority of the second packet.

In this embodiment of this application, the receiving unit receives, from the target link, the packet sent by the first primary transmission device, where the target link is the link that is between the first primary transmission device and the second primary transmission device and that is used to transmit the network traffic, the target link includes the link between the first device and the second device, the first device is connected to the first primary transmission device, the second device is connected to the second primary transmission device, and the first device and the second device are the third-party devices different from the first primary transmission device and the second primary transmission device. The processing unit measures the actual bandwidth of the target link based on the data amount of each packet received within the period of time. The sending unit sends the third packet to the first primary transmission device, where the third packet includes the actual bandwidth, and the third packet is used to trigger the first primary transmission device to send the packet on the target link based on the actual bandwidth. Because the third packet sent by the sending unit to the first primary transmission device includes the actual bandwidth, the first primary transmission device sends the first packet on the target link based on the actual bandwidth, where the first packet is the packet belonging to the network traffic. In this way, the bandwidth of the target link is occupied as much as possible to send the network traffic, so that a waste of bandwidth resources is reduced.

FIG. 8 is a schematic diagram of a communication apparatus 500 according to an embodiment of this application. The apparatus 500 may be a controller in any one of the foregoing embodiments, for example, may be the first primary transmission device in any one of the foregoing embodiments. The apparatus 500 includes: at least one processor 501, a bus system 502, a memory 503, and at least one transceiver 504.

The apparatus 500 is an apparatus of a hardware structure, and may be configured to implement functional modules in the apparatus 300 shown in FIG. 6. For example, a person skilled in the art may figure out that the processing unit 301 in the apparatus 300 shown in FIG. 6 may be implemented by the at least one processor 501 by invoking code in the memory 503, and the sending unit 302 and the receiving unit 303 in the apparatus 300 shown in FIG. 6 may be implemented by the transceiver 504.

Optionally, the apparatus 500 may further be configured to implement a function of the collection analysis device in any one of the foregoing embodiments.

Optionally, the processor 501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The bus system 502 may include a path for transmitting information between the foregoing components.

The transceiver 504 is configured to communicate with another device or a communication network.

The memory 503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 503 is configured to store application program code for executing the solutions in this application, and the processor 501 controls execution. The processor 501 is configured to execute the application program code stored in the memory 503, to implement functions in the method in this patent.

During specific implementation, in an embodiment, the processor 501 may include one or more CPUs, for example, a CPU 0 and a CPU 1 in FIG. 8.

During specific implementation, in an embodiment, the apparatus 500 may include a plurality of processors, for example, the processor 501 and a processor 507 shown in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

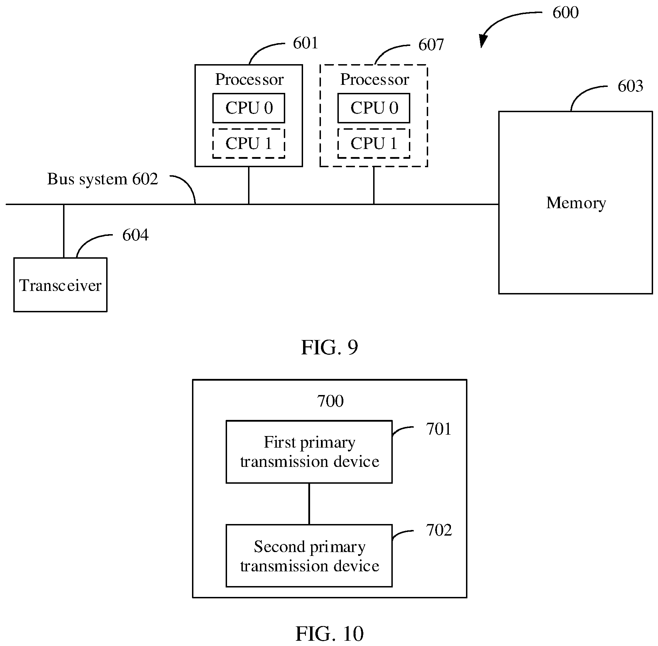

FIG. 9 is a schematic diagram of a communication apparatus 600 according to an embodiment of this application. The apparatus 600 may be the second primary transmission device in any one of the foregoing embodiments. The apparatus 600 includes: at least one processor 601, a bus system 602, a memory 603, and at least one transceiver 604.

The apparatus 600 is an apparatus of a hardware structure, and may be configured to implement functional modules in the apparatus 400 shown in FIG. 7. For example, a person skilled in the art may figure out that the processing unit 402 in the apparatus 400 shown in FIG. 7 may be implemented by the at least one processor 601 by invoking code in the memory 603, and the receiving unit 401 and the sending unit 403 in the apparatus 400 shown in FIG. 17 may be implemented by the transceiver 604.

Optionally, the apparatus 600 may further be configured to implement a function of the collection analysis device in any one of the foregoing embodiments.

Optionally, the processor 601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The bus system 602 may include a path for transmitting information between the foregoing components.

The transceiver 604 is configured to communicate with another device or a communication network.

The memory 603 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 603 is configured to store application program code for executing the solutions in this application, and the processor 601 controls execution. The processor 601 is configured to execute the application program code stored in the memory 603, to implement functions in the method in this patent.

During specific implementation, in an embodiment, the processor 601 may include one or more CPUs, for example, a CPU 0 and a CPU 1 in FIG. 9.

During specific implementation, in an embodiment, the apparatus 600 may include a plurality of processors, for example, the processor 601 and a processor 607 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 10. An embodiment of this application provides a communication system 700. The system 700 includes the apparatus 300 shown in FIG. 6 and the apparatus 400 shown in FIG. 7, or the system 700 includes the apparatus 500 shown in FIG. 8 and the apparatus 600 shown in FIG. 9.

Optionally, refer to FIG. 10. The apparatus 300 in FIG. 6 or the apparatus 500 in FIG. 8 may be a first primary transmission device 701, and the apparatus 400 in FIG. 7 or the apparatus 600 in FIG. 9 may be a second primary transmission device 702. For example, the apparatus 300 shown in FIG. 6 or the apparatus 500 shown in FIG. 8 may be the first primary transmission device in any one of embodiments shown in FIG. 1 to FIG. 5, and the apparatus 400 shown in FIG. 7 or the apparatus 600 shown in FIG. 9 may be the second primary transmission device in any one of embodiments shown in FIG. 1 to FIG. 5.

The foregoing descriptions are merely example embodiments of this application, but are not intended to limit this application. Any modification, equivalent replacement, or improvement made without departing from the spirit and principle of this application should fall within the protection scope of this application.

## Claims

1. A communication method, wherein the method comprises:
obtaining, by a first primary transmission device, an actual bandwidth of a target link, wherein the target link is a link that is between the first primary transmission device and a second primary transmission device and that is used to transmit network traffic, the target link comprises a link between a first device and a second device, the first device is connected to the first primary transmission device, the second device is connected to the second primary transmission device, and the first device and the second device are third-party devices different from the first primary transmission device and the second primary transmission device; and
sending, by the first primary transmission device, a first packet on the target link based on a first bandwidth, and sending a second packet on the target link based on a second bandwidth, wherein the first bandwidth is less than or equal to the actual bandwidth, the second bandwidth is equal to a total bandwidth of an interface minus the first bandwidth, the interface is an interface that is on the first primary transmission device and that is connected to the first device, the first packet is a packet belonging to the network traffic, and the second packet is a packet used to measure the bandwidth of the target link.

2. The method according to claim 1, wherein a priority of the first packet is higher than a priority of the second packet.

3. The method according to claim 1 or 2, wherein the first packet comprises first indication information, the first indication information indicates a packet type of the first packet, the second packet comprises second indication information, and the second indication information indicates a packet type of the second packet.

4. The method according to any one of claims 1 to 3, wherein the obtaining, by a first primary transmission device, an actual bandwidth of a target link comprises:
receiving, by the first primary transmission device, a third packet sent by the second primary transmission device, wherein the third packet comprises the actual bandwidth obtained by the second primary transmission device by measuring the target link, and a priority of the third packet is higher than the priority of the second packet.

5. A communication method, wherein the method comprises:
receiving, by a second primary transmission device from a target link, a packet sent by a first primary transmission device, wherein the target link is a link that is between the first primary transmission device and the second primary transmission device and that is used to transmit network traffic, the target link comprises a link between a first device and a second device, the first device is connected to the first primary transmission device, the second device is connected to the second primary transmission device, and the first device and the second device are third-party devices different from the first primary transmission device and the second primary transmission device;
measuring, by the second primary transmission device, an actual bandwidth of the target link based on a data amount of each packet received within a period of time; and
sending, by the second primary transmission device, a third packet to the first primary transmission device, wherein the third packet comprises the actual bandwidth, and the third packet is used to trigger the first primary transmission device to send a packet on the target link based on the actual bandwidth.

6. The method according to claim 5, wherein the sending, by the second primary transmission device, a third packet to the first primary transmission device comprises:
sending, by the second primary transmission device, a plurality of third packets to the first primary transmission device when the actual bandwidth is different from a previously measured bandwidth of the target link, wherein each third packet comprises the actual bandwidth.

7. The method according to claim 5 or 6, wherein the packet comprises indication information, the indication information indicates a packet type of the packet, and after the receiving, by a second primary transmission device from a target link, a packet sent by a first primary transmission device, the method further comprises:
sending, by the second primary transmission device, a first packet when the indication information indicates that the packet is the first packet, wherein the first packet is a packet belonging to the network traffic; or discarding a second packet when the indication information indicates that the packet is the second packet, wherein the second packet is a packet used to measure the bandwidth of the target link.

8. The method according to claim 7, wherein a priority of the first packet is higher than a priority of the second packet, and a priority of the third packet is higher than the priority of the second packet.

9. A communication apparatus, wherein the apparatus comprises:
a processing unit, configured to obtain an actual bandwidth of a target link, wherein the target link is a link that is between the apparatus and a second primary transmission device and that is used to transmit network traffic, the target link comprises a link between a first device and a second device, the first device is connected to the apparatus, the second device is connected to the second primary transmission device, and the first device and the second device are third-party devices different from the apparatus and the second primary transmission device; and
a sending unit, configured to: send a first packet on the target link based on a first bandwidth, and send a second packet on the target link based on a second bandwidth, wherein the first bandwidth is less than or equal to the actual bandwidth, the second bandwidth is equal to a total bandwidth of an interface minus the first bandwidth, the interface is an interface that is on the apparatus and that is connected to the first device, the first packet is a packet belonging to the network traffic, and the second packet is a packet used to measure the bandwidth of the target link.

10. The apparatus according to claim 9, wherein a priority of the first packet is higher than a priority of the second packet.

11. The apparatus according to claim 9 or 10, wherein the first packet comprises first indication information, the first indication information indicates a packet type of the first packet, the second packet comprises second indication information, and the second indication information indicates a packet type of the second packet.

12. The apparatus according to any one of claims 9 to 11, wherein the apparatus further comprises:
a receiving unit, configured to receive a third packet sent by the second primary transmission device, wherein the third packet comprises the actual bandwidth obtained by the second primary transmission device by measuring the target link, and a priority of the third packet is higher than the priority of the second packet.

13. A communication apparatus, wherein the apparatus comprises:
a receiving unit, configured to receive, from a target link, a packet sent by a first primary transmission device, wherein the target link is a link that is between the first primary transmission device and the apparatus and that is used to transmit network traffic, the target link comprises a link between a first device and a second device, the first device is connected to the first primary transmission device, the second device is connected to the apparatus, and the first device and the second device are third-party devices different from the first primary transmission device and the apparatus;
a processing unit, configured to measure an actual bandwidth of the target link based on a data amount of each packet received within a period of time; and
a sending unit, configured to send a third packet to the first primary transmission device, wherein the third packet comprises the actual bandwidth, and the third packet is used to trigger the first primary transmission device to send a packet on the target link based on the actual bandwidth.

14. The apparatus according to claim 13, wherein the sending unit is configured to: send a plurality of third packets to the first primary transmission device when the actual bandwidth is different from a previously measured bandwidth of the target link, wherein each third packet comprises the actual bandwidth.

15. The apparatus according to claim 13 or 14, wherein the packet comprises indication information, the indication information indicates a packet type of the packet, and
the sending unit is further configured to send a first packet when the indication information indicates that the packet is the first packet, wherein the first packet is a packet belonging to the network traffic; or
the processing unit is further configured to discard a second packet when the indication information indicates that the packet is the second packet, wherein the second packet is a packet used to measure the bandwidth of the target link.

16. The apparatus according to claim 15, wherein a priority of the first packet is higher than a priority of the second packet, and a priority of the third packet is higher than the priority of the second packet.

17. A communication system, wherein the system comprises the apparatus according to any one of claims 9 to 12 and the apparatus according to any one of claims 13 to 16.
